# EUROPÄISCHE PATENTSCHRIFT

(11) **EP 1 859 857 B1**
(45) Veröffentlichungstag und Bekanntmachung des Hinweises auf die Patenterteilung: **29.04.2009**
(21) Anmeldenummer: 07008166.6
(22) Anmeldetag: 21.04.2007
(51) Int. Cl.: B01J 4/00, B01J 8/02, B01J 19/00, C01B 3/38

(54) **Vorrichtung zur Herstellung eines Kraftstoff-Oxidationsmittel-Gemischs**
Device for manufacturing a fuel oxidation agent mixture
Dispositif de fabrication d'un mélange carburant-agent d'oxydation

(30) Priorität: 23.05.2006 DE 102006024038
(43) Veröffentlichungstag der Anmeldung: 28.11.2007
(73) Patentinhaber: Forschungszentrum Jülich GmbH, 52425 Jülich (DE)
(72) Erfinder: Pors, Zdenek, 52428 Jülich (DE); Peters, Ralf, 52146 Würselen (DE); Pasel, Joachim, 52428 Jülich (DE); Tschauder, Andreas, 49492 Westerkappeln (DE); Dahl, Rudolf, 52428 Jülich (DE); Samsun, Remzi Can, 52062 Aachen (DE); Stolten, Detlef, 52076 Aachen (DE)

(56) Entgegenhaltungen:
- EP-A2- 0 303 439
- DE-A1-7102004 024 95
- DE-A1-5102004 055 42
- US-A1- 2003 188 486

## Beschreibung

Die Erfindung betrifft eine Vorrichtung zur Herstellung eines Kraftstoff-Oxidationsmittel-Gemischs.

### Stand der Technik

Brennstoffzellen zur Umwandlung chemischer Energie in elektrische Energie arbeiten am effektivsten, wenn ein wasserstoffhaltiges Gas als Brennstoff verwendet wird. Ein solches Gas lässt sich in einem Reformer aus kohlenwasserstoffhaltigen Brennstoffen gewinnen. Hierfür muss der Brennstoff verdampft und mit einem Oxidationsmittel vermischt werden.

Aus der deutschen Patentanmeldung 10 2004 055 425.0 ist eine Mischkammer bekannt, in der aus einem flüssigen Kraftstoff, wie Benzin oder Diesel, ein homogenes Kraftstoff-Luft-Gemisch für die Umsetzung zu einem wasserstoffreichen Gas in einem Reformer hergestellt werden kann. Der flüssige Kraftstoff wird in einer ersten Zone durch Kontakt mit einem heißen primären Medium, wie etwa Wasserdampf, verdampft. In einer zweiten Zone wird er mit dem Oxidationsmittel durchmischt.

Aus der deutschen Patentanmeldung 10 2006 016 912.3 ist eine Mischkammer bekannt, in der der Kraftstoff vor der eigentlichen Durchmischung mit Hilfe eines oxidierenden sekundären Mediums teilweise oxidiert wird. Durch diese exotherme Reaktion werden auch schwer siedende Bestandteile des Kraftstoffs verdampft.

Nachteilig wird die Durchmischung des verdampften Kraftstoffs mit dem Oxidationsmittel bei größeren Mischkammern dieser Bauart tendenziell weniger homogen. Dadurch können Ablagerungen entstehen, die die Lebensdauer eines nachgeschalteten Reformers verringern.

### Aufgabe und Lösung

Aufgabe der Erfindung ist daher, eine Vorrichtung zur Verfügung zu stellen, in der auch größere Mengen an Kraftstoff homogen mit einem Oxidationsmittel durchmischt werden können.

Diese Aufgabe wird erfindungsgemäß gelöst durch eine Vorrichtung gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde eine Vorrichtung zur Herstellung eines Kraftstoff-Oxidationsmittel-Gemischs für einen Reformer entwickelt. Diese Vorrichtung umfasst ein von einem Kraftstoffdampf in mindestens einer Strömungsrichtung durchströmbares Rohr mit mindestens einer Zuführung für ein Oxidationsmittel in seiner Wandung.

Erfindungsgemäß ist im Bereich der Zuführung ein Mittel zur Ableitung der achsnahen Strömung des Kraftstoffdampfs in die äußeren Bereiche des Rohrs angeordnet.

Unter dem Bereich der Zuführung im Sinne dieser Erfindung wird der Bereich verstanden, in dem sich das durch die Zuführung eingebrachte Oxidationsmittel ausbreitet.

Es wurde erkannt, dass insbesondere für die Durchmischung des Kraftstoffs mit dem Oxidationsmittel bei größeren Querschnitten vorteilhafte Verwirbelungen des Oxidationsmittels den achsnahen Bereich des Rohrs häufig nachteilig vom Oxidationsmittel freihalten. Im achsnahen Bereich strömt somit Kraftstoff durch das Rohr, ohne mit dem Oxidationsmittel ausreichend durchmischt zu werden. Dies kann bei der Umsetzung des Kraftstoff-Oxidationsmittel-Gemischs in einem nachgeschalteten Reformer nachteilig zur Rußbildung führen. Das erfindungsgemäß vorgesehene Mittel zur Ableitung versperrt dem Kraftstoff den Weg durch den oxidationsmittelfreien achsnahen Bereich und lenkt ihn in die oxidationsmittelreichen äußeren Bereiche des Rohrs um. Dadurch entsteht ein deutlich homogeneres Kraftstoff-Oxidationsmittel-Gemisch als nach dem Stand der Technik.

Diese Wirkung ist besonders ausgeprägt in einer vorteilhaften Ausgestaltung der Erfindung, in der die Stoffaustrittsrichtung der Zuführung axial oder tangential um bis zu 15 Grad von der radialen Richtung abweicht. Eine tangentiale Abweichung erzeugt rotierende Wirbel im zugeführten Oxidationsmittel, was die Durchmischung mit dem Kraftstoff verbessert. Andererseits neigen gerade diese rotierenden Wirbel dazu, den achsnahen Bereich des Rohrs vom Oxidationsmittel freizuhalten. Dieser nachteilige Effekt wird durch das erfindungsgemäß vorgesehene Mittel zur Ableitung unterbunden.

Die Zuführung kann beispielsweise in mehreren Bohrungen in der Wandung des Rohrs bestehen. In einem konkreten Ausführungsbeispiel besteht die Zuführung aus 20 Bohrungen von je 2 mm Durchmesser bei einem Rohrdurchmesser von 70 mm.

Die vorteilhafte Wirkung ist tendenziell bei Vorrichtungen mit größerem Rohrdurchmesser stärker ausgeprägt, da mit größerem Rohrdurchmesser auch der Durchmesser des achsnahen Bereichs wächst, der durch Verwirbelungen vom Oxidationsmittel freigehalten wird. Der nachteilige Effekt, der durch das erfindungsgemäße Mittel zur Ableitung unterbunden wird, wird in der Praxis bei Vorrichtungen für Reformer einer Größenordnung relevant, die genügend Brenngas für Brennstoffzellen mit einer elektrischen Leistung ab etwa 10 kW erzeugen. Im Ausführungsbeispiel wird eine Vorrichtung für einen Reformer beschrieben, der für die Brenngasversorgung von Brennstoffzellen mit einer elektrischen Leistung von 50 kW ausgelegt ist.

Um den Strömungswiderstand durch das Mittel einerseits möglichst gering zu halten, andererseits aber die Durchmischung des Kraftstoffs mit dem Oxidationsmittel zu verbessern, sind besondere äußere Geometrien des Mittels besonders geeignet.

Vorteilhaft nimmt der normal zur Strömungsrichtung gemessene Außendurchmesser des Mittels entlang der Strömungsrichtung ein lokales Maximum an. Insbesondere kann das Mittel wenigstens einen tropfenförmigen Teil umfassen. Es kann aber auch an seinem, in Strömungsrichtung gesehen, vorderen Ende einen größeren Außendurchmesser aufweisen als an seinem hinteren Ende und hier insbesondere wenigstens einen spindelförmigen Teil umfassen. Dies verbessert die Durchmischung des Kraftstoffs mit dem Oxidationsmittel und vermeidet Stauungen im Rohr.

Vorteilhaft nimmt der normal zur Strömungsrichtung gemessene Außendurchmesser des Mittels entlang der Strömungsrichtung ein lokales Minimum an. Insbesondere kann dieses lokale Minimum, in Strömungsrichtung gesehen, vor dem Bereich der Zuführung angeordnet sein. Eine derartige wulstförmige Spitze des Mittels bewirkt, dass der kompakte Strom des Kraftstoffdampfs nicht erst im Bereich der Zuführung zu allen Seiten geleitet wird, sondern schon kurz vorher. Dies verbessert ebenfalls den Vermischungsprozess.

In einer besonders vorteilhaften Ausgestaltung der Erfindung ist das Mittel ein längliches Mittel, welches sich sowohl vor als auch hinter den Bereich der Zuführung erstreckt.

Unter einem länglichen Mittel wird ein Mittel verstanden, dessen größter Außendurchmesser senkrecht zur Strömungsrichtung des Kraftstoffdampfs geringer ist als seine Länge in Strömungsrichtung des Kraftstoffdampfs.

Die längliche Ausgestaltung des Mittels bewirkt, dass der Kraftstoffdampf einen besonders langen Weg durch das oxidationsmittelreiche Gebiet zurücklegen muss. Er wird dadurch besonders gut mit dem Oxidationsmittel durchmischt.

Ein größter Außendurchmesser des Mittels zwischen dem 0,3-fachen und dem 0,5-fachen des Rohrdurchmessers hat sich als vorteilhaft erwiesen. Ist der größte Außendurchmesser zu klein, versperrt das Mittel nicht den gesamten achsnahen, oxidationsmittelfreien Bereich. Ist er zu groß, staut sich der Kraftstoffdampf im Rohr, was die Durchmischung verschlechtert und gleichzeitig auch den Durchsatz beeinträchtigt. In einem konkreten Ausführungsbeispiel beträgt der größte Außendurchmesser des Mittels 3 cm, bei einem Rohrdurchmesser von 7 cm.

Das Mittel kann aus jedem Werkstoff bestehen, der hochwärmefest ist und weder mit dem Oxidationsmittel noch mit dem Kraftstoff chemisch reagiert. Diese Anforderungen werden für übliche Kraftstoffe wie Benzin, Diesel, Kerosin und Heizöl insbesondere von Keramik und rostfreiem Stahl erfüllt.

In einer besonders vorteilhaften Ausgestaltung der Erfindung ist das Mittel mit mindestens einem Verbindungselement an der Wandung des Rohrs befestigt. Dies behindert den Strom des Kraftstoff-Oxidationsmittel-Gemisches deutlich weniger als eine Befestigung des Mittels am nachgeschalteten Reformer.

Hauptanforderung an das Verbindungselement ist, dass die Strömung des Kraftstoffdampfs möglichst wenig beeinträchtigt werden soll. Diese Anforderung wird am besten von einem Verbindungselement mit kreisförmigem Querschnitt erfüllt. Aber auch eine Schaufel als Verbindungselement behindert die Strömung nicht wesentlich, wenn sie gerade ist und ihre Kante auf die Strömung des Kraftstoffdampfs hin ausgerichtet ist.

Unter einer Schaufel wird im Rahmen dieser Erfindung ein Blatt verstanden, dessen Dicke weniger als das 0,2-fache seiner Länge und seiner Breite beträgt. Der Werkstoff für die Schaufel kann aus den gleichen Werkstoffklassen gewählt werden, die auch für das Mittel selbst geeignet sind.

Ein Verbindungselement mit kreisförmigem Querschnitt hat jedoch gegenüber einer geraden Schaufel den Vorteil, dass seine Wirkung auf die Strömung nicht von der genauen Strömungsrichtung abhängt.

Bei rotierenden Strömungen wiederum ist es vorteilhaft, wenn die Schaufel gekrümmt und hier insbesondere tangential gekrümmt ist. Dies reduziert oder verhindert eine mögliche Ablösung der Strömung. Zugleich bewirkt diese Schaufelform eine noch bessere Durchmischung des Kraftstoffs mit dem Oxidationsmittel.

Optional kann das Rohr im Bereich des Mittels eine Verengung aufweisen. Dies hält den oxidationsmittelfreien achsnahen Bereich von vornherein klein. Insoweit ergänzen sich die Wirkung der Verengung und die Wirkung des erfindungsgemäßen Mittels.

In einer besonders vorteilhaften Ausgestaltung der Erfindung ist dem Rohr eine Verdampfungskammer vorgeschaltet. Diese weist dem Rohr axial gegenüber liegende Düsen für einen flüssigen Kraftstoff sowie für ein primäres Medium zur Verdampfung des Kraftstoffs auf. Eine derartige Verdampfungskammer liefert einen Kraftstoffdampf mit nur noch wenigen festen oder flüssigen Bestandteilen. Diese Bestandteile sind in der erfindungsgemäßen Vorrichtung nicht erwünscht, da sie sich insbesondere am Mittel zur Ablenkung anlagern können.

Als primäres Medium ist prinzipiell jedes Medium geeignet, das eine höhere Temperatur aufweist als die Verdampfungstemperatur des Kraftstoffs und das mit dem Kraftstoff keine chemische Reaktion eingeht. Das für die Praxis relevanteste primäre Medium ist überhitzter Wasserdampf.

Als flüssiger Kraftstoff wird üblicherweise ein raffiniertes Erdölprodukt wie Benzin, Diesel, Kerosin oder Heizöl verwendet.

Vorteilhaft ist der Abstand zwischen den Düsen und dem Rohr mindestens dreimal so groß wie die in Strömungsrichtung des Kraftstoffdampfs gemessene Länge des Mittels. Dadurch wird sichergestellt, dass die Verdampfung des Kraftstoffs bereits abgeschlossen ist, wenn der Kraftstoffdampf auf das Mittel zur Ableitung trifft.

Die rein physikalische Verdampfung des Kraftstoffs lässt sich durch konstruktive Maßnahmen an den Düsen der Verdampfungskammer weiter verbessern. Die Düse für den flüssigen Kraftstoff kann eine Dralldruckzerstäubungsdüse sein. Der Düse für das primäre Medium kann mindestens ein Drallerzeuger vorgeschaltet sein. Ein Drallerzeuger ist im Prinzip ein feststehendes Schaufelrad mit radialen, radial-tangentialen oder tangentialen Leitschaufeln, die je nach dem gewünschten Drallwinkel der Strömung ausgerichtet sind.

Die Düse für das primäre Medium kann vorteilhaft die Düse für den flüssigen Kraftstoff umgeben und insbesondere mehrere Zuleitungen für das primäre Medium aufweisen. Das primäre Medium wird dann gleichmäßig verteilt und umströmt die Düse für den Kraftstoff. Die Strömung breitet sich in die positive axiale Richtung aus und vermischt sich mit dem Sprühbild des eingespritzten Kraftstoffs. Die Kombination der Düsen für das primäre Medium und für den Kraftstoff kann als Zweistoffdüse angesehen werden.

Hinter diesen Maßnahmen steckt die gemeinsame Idee, dass eine starke Rotation der Strömungen von Kraftstoff und primärem Medium gegeneinander die Wechselwirkungsdauer erhöht und somit die Durchmischung verbessert.

In einer besonders vorteilhaften Ausgestaltung der Erfindung weist die Verdampfungskammer zusätzliche Düsen für ein oxidierendes sekundäres Medium auf. Dieses sekundäre Medium kann insbesondere mit dem in das Rohr eingedüsten Oxidationsmittel identisch sein. Das sekundäre Medium oxidiert den Kraftstoff teilweise. Diese Flamme setzt Wärme frei, mit der auch schwer verdampfbare Anteile des Kraftstoffs verdampft werden können. Die festen und flüssigen Anteile im Kraftstoffdampf, die sich insbesondere am Mittel zur Ableitung oder auch in einem nachgeschalteten Reformer anlagern könnten, werden somit nochmals reduziert. Zwar kostet die teilweise Oxidation einen Teil der im Kraftstoff enthaltenen Energie, doch wird dies in der Regel dadurch aufgewogen, dass auch die bislang unverdampfbaren Kraftstoffanteile nunmehr verwertet werden, statt als Abfall abgeschieden werden zu müssen.

Vorteilhaft ist mindestens eine Rezirkulationsleitung zur Rückführung von Gasen in den Bereich der Düsen für den Kraftstoff und für das primäre Medium vorgesehen. Diese Leitung führt mit Sauerstoff angereicherte heiße Gase zurück in den Bereich der Kraftstoffeinspritzung. Dadurch werden der Wärmetransport und der Stofftransport von Radikalen im Bereich der Flamme begünstigt.

Die Rezirkulationsleitung kann vollständig innerhalb der Verdampfungskammer angeordnet sein. Dann werden Gase aus dem Bereich vor der Zuführung für das Oxidationsmittel zurückgeführt. Nur ein Teil des hier zugeführten Oxidationsmittels, etwa zwischen 10 und 30 Prozent, strömt wegen der Rückströmungen stromaufwärts in die Verdampfungskammer und somit in die Rezirkulationsleitung.

Alternativ kann sich die Rezirkulationsleitung bis jenseits der Zuführung für das Oxidationsmittel erstrecken. Diese Ausgestaltung hat den Vorteil, dass die rückgeführten Gase heißer sind und einen höheren Sauerstoffgehalt aufweisen. Außerdem können der Kraftstoff und das sekundäre Medium länger miteinander wechselwirken als bei einer Rückführung innerhalb der Verdampfungskammer.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Ursache der ungenügenden Durchmischung nach dem Stand der Technik.
- Figur 2:: Ausführungsbeispiel der erfindungsgemäßen Vorrichtung mit Verdampfungskammer, wobei das Mittel zur Ableitung eine wulstförmige Spitze aufweist.
- Figur 3:: Ausführungsbeispiel des Mittels zur Ableitung mit tangential gebogenen Schaufeln.
- Figur 4:: Prinzip der Strömungsgleichrichtung bei tangential gebogenen Schaufeln und rotierender Strömung.
- Figur 5:: Ausführungsbeispiel der Düsen für den Kraftstoff und für das primäre Medium.
- Figur 6:: Prinzip der Rückführung heißer Gase in die Verdampfungszone mit Hilfe einer Rezirkulationsleitung.
- Figur 7:: Ausführungsbeispiel einer Rezirkulationsleitung innerhalb der Verdampfungskammer.
- Figur 8:: Ausführungsbeispiel einer Rezirkulationsleitung, die sich bis jenseits der Zuführung für das Oxidationsmittel erstreckt.

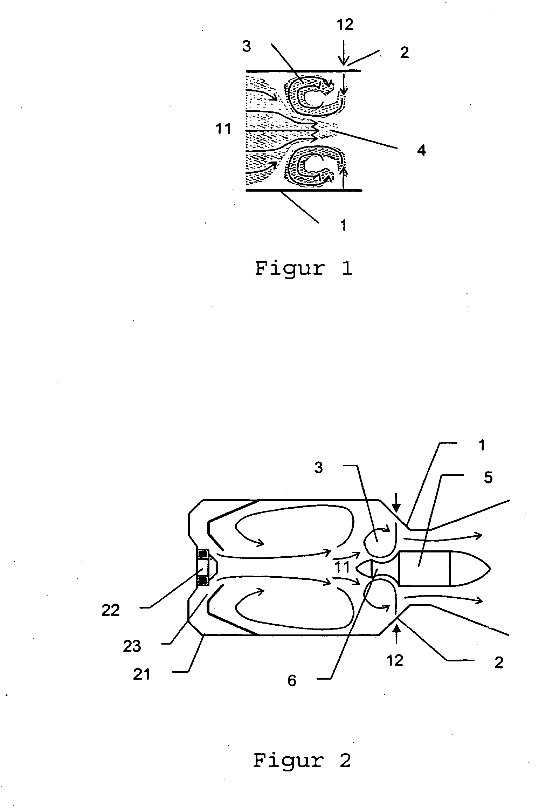

In Figur 1 ist die erfindungsgemäß erkannte Ursache der ungenügenden Durchmischung nach dem Stand der Technik skizziert. Die Vorrichtung umfasst ein Rohr 1, welches von einem Kraftstoffdampf 11 durchströmt werden kann. Das Rohr weist Zuführungen 2 für ein Oxidationsmittel 12 auf. Das Oxidationsmittel 12 bildet im Rohr 1 Verwirbelungen 3 aus. Diese halten den achsnahen Bereich 4 von Oxidationsmittel frei. Der Kraftstoffdampf 11 kann somit den Bereich 4 passieren, ohne mit dem Oxidationsmittel 12 durchmischt zu werden.

Figur 2 zeigt ein Ausführungsbeispiel der erfindungsgemäßen Vorrichtung. Im achsnahen Bereich des Rohrs 1 befindet sich das erfindungsgemäße Mittel 5 zum Ableiten, welches eine wulstförmige Spitze 6 aufweist. Dadurch muss der Kraftstoffdampf 11 die Verwirbelungen 3 aus Oxidationsmittel passieren und sich dabei mit dem Oxidationsmittel durchmischen. Das Mittel 5 ist länglich ausgestaltet und erstreckt sich sowohl vor als auch hinter den Bereich, in dem das Oxidationsmittel 12 zugeführt wird. Der Kraftstoffdampf 11 wird von einer Mischkammer 21 bereitgestellt. Diese weist eine Düse 22 für einen flüssigen Kraftstoff sowie eine Düse 23 für ein primäres Medium auf, wobei die Düse 23 die Düse 22 umgibt.

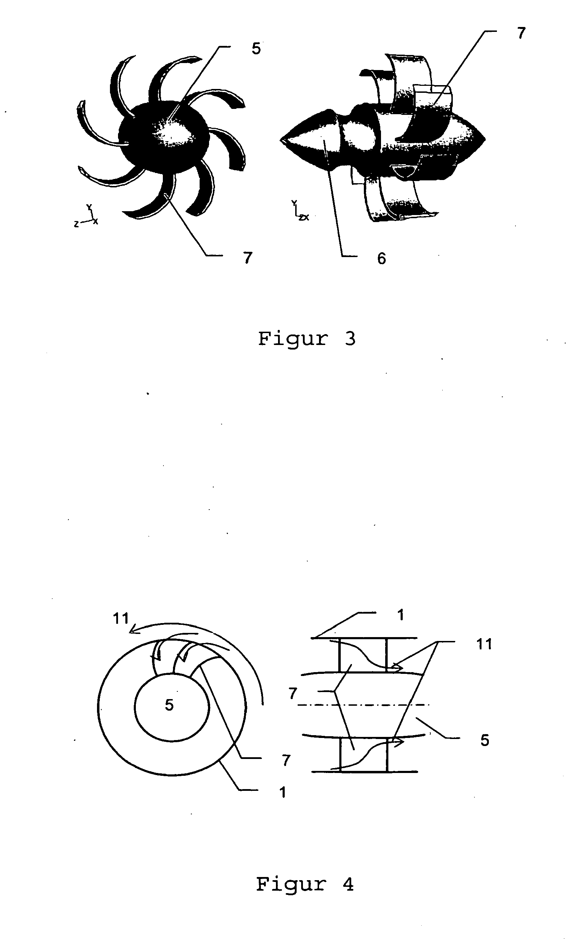

Figur 3 zeigt ein Ausführungsbeispiel des Mittels 5 zur Ableitung in zwei Ansichten. Das Mittel 5 weist tangential gebogene Schaufeln 7 zur Befestigung an der Wandung des Rohrs 1 auf.

Die Wirkungsweise dieses Ausführungsbeispiels ist in Figur 4 in einer Vorderansicht (linkes Teilbild) und in einer Seitenansicht (rechtes Teilbild) dargestellt. Der Kraftstoffdampf 11 trifft in Form einer rotierenden Strömung auf die Schaufeln 7. Durch die tangentiale Biegung der Schaufeln 7 wird der Kraftstoffdampf 11 in eine Strömung entlang der Oberfläche des Mittels 5 überführt. Die tangential gebogenen Schaufeln 7 bewirken somit eine Strömungsgleichrichtung.

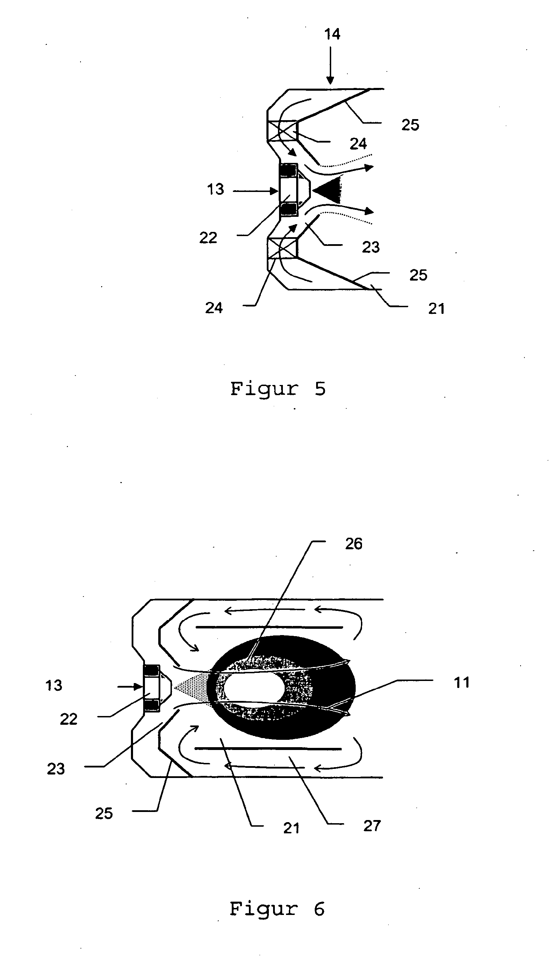

Figur 5 zeigt ein Ausführungsbeispiel der Düse 22 für den flüssigen Kraftstoff 13 und der Düse 23 für das primäre Medium 14. In der Düse 23 für das primäre Medium, deren Form durch Leitbleche 25 bestimmt wird, sind Drallerzeuger 24 angeordnet.

In Figur 6 ist das Prinzip der Rückführung heißer Gase in die Verdampfungszone mit Hilfe einer Rezirkulationsleitung skizziert. Die Mischkammer 21 weist hier nicht eingezeichnete Zuführungen für ein oxidierendes sekundäres Medium auf. Es kommt in einem Bereich 26 innerhalb der Mischkammer 21 zu einer partiellen Oxidation des Kraftstoffdampfs 11. Diese partielle Oxidation liefert die Energie für die Verdampfung schwer siedender Komponenten des flüssigen Kraftstoffs 13. Heiße Gase werden vom hinteren Teil der Mischkammer durch die Rezirkulationsleitung 27 in die Verdampfungszone zurückgeführt.

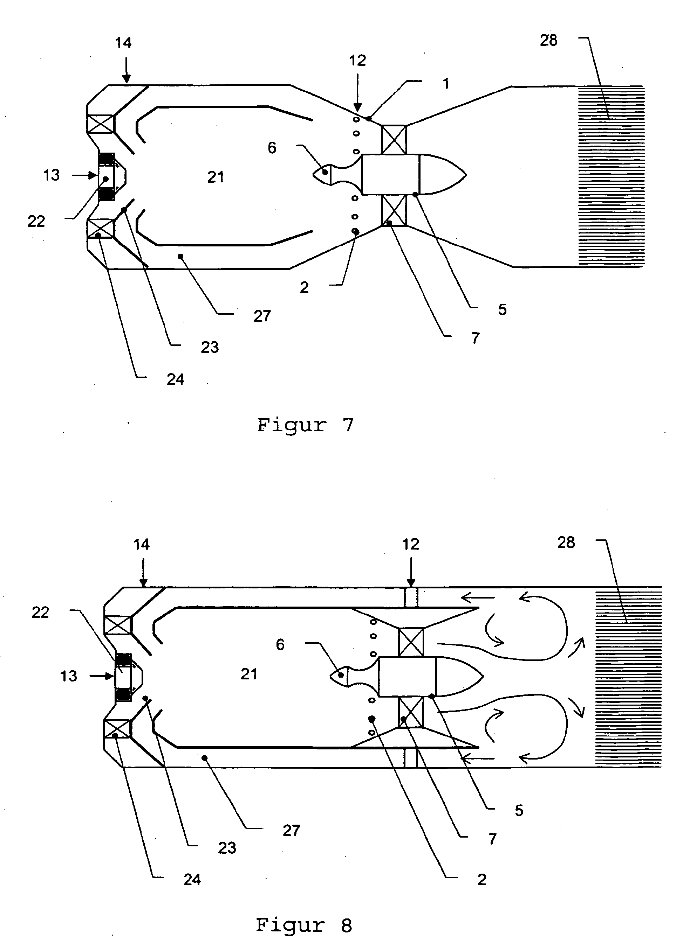

Figur 7 zeigt ein Ausführungsbeispiel einer Rezirkulationsleitung 27 innerhalb der Verdampfungskammer 21. In diesem Ausführungsbeispiel ist die Rezirkulationsleitung 27 vollständig innerhalb der Verdampfungskammer 21 angeordnet. Dem Rohr 1 ist ein Reformer mit einem Katalysator 28 nachgeschaltet.

Figur 8 zeigt ein Ausführungsbeispiel für die alternative Anordnung, bei der die Rezirkulationsleitung 27 sich bis jenseits der Zuführung für das Oxidationsmittel erstreckt. Das Oxidationsmittel 12 wird über eine, hier trapezförmig eingezeichnete, Luftkammer auf die Zuführungen 2 verteilt.

Ein konkretes Ausführungsbeispiel ist für einen autothermen Dieselreformer dimensioniert, der eine Brennstoffzelle mit einer elektrischen Leistung von 50 kW mit Brenngas zu versorgen vermag. Pro Stunde werden 13,5 kg Kraftstoff umgesetzt. Es wird Aral Ultimate Diesel verwendet mit einem O₂/C-Verhältnis von 0,47 und einem H₂O/C-Verhältnis von 1,90. Als primäres Medium 14 wird überhitzter Wasserdampf mit einer Temperatur von 450 °C verwendet. Als oxidierendes sekundäres Medium sowie als Oxidationsmittel 12 wird Luft verwendet, die mit Umgebungstemperatur zugeführt wird. Die Mischkammer weist eine Länge von 30 cm und einen Durchmesser von 12 cm auf. Die Verdampfungskammer ist 17,5 cm lang. Die Rezirkulationsleitung ist 13 cm lang, liegt also vollständig innerhalb der Verdampfungskammer. Sie hat einen Durchmesser von 9 cm.

## Patentansprüche

1. Vorrichtung zur Herstellung eines Kraftstoff-Oxidationsmittel-Gemischs für einen Reformer, umfassend ein von einem Kraftstoffdampf in mindestens einer Strömungsrichtung durchströmbares Rohr mit mindestens einer Zuführung für ein Oxidationsmittel in seiner Wandung, **gekennzeichnet durch** mindestens ein im Bereich der Zuführung angeordnetes Mittel zur Ableitung der achsnahen Strömung des Kraftstoffdampfs in die äußeren Bereiche des Rohrs.

2. Vorrichtung nach Anspruch 1, **gekennzeichnet durch** eine Zuführung, deren Stoffaustrittsrichtung um bis zu 15 Grad von der radialen Richtung abweicht.

3. Vorrichtung nach einem der Ansprüche 1 bis 2, **gekennzeichnet durch** ein Mittel, dessen normal zur Strömungsrichtung gemessener Außendurchmesser entlang der Strömungsrichtung ein lokales Maximum annimmt.

4. Vorrichtung nach Anspruch 3, **gekennzeichnet durch** ein Mittel, das wenigstens einen tropfenförmigen Teil umfasst.

5. Vorrichtung nach Anspruch 3, **dadurch gekennzeichnet, dass** das Mittel an seinem, in Strömungsrichtung gesehen, vorderen Ende einen größeren Außendurchmesser aufweist als an seinem hinteren Ende.

6. Vorrichtung nach Anspruch 5, **gekennzeichnet durch** ein Mittel, das wenigstens einen spindelförmigen Teil umfasst.

7. Vorrichtung nach einem der Ansprüche 1 bis 6, **gekennzeichnet durch** ein Mittel, dessen normal zur Strömungsrichtung gemessener Außendurchmesser entlang der Strömungsrichtung ein lokales Minimum annimmt.

8. Vorrichtung nach Anspruch 7, **dadurch gekennzeichnet, dass** das lokale Minimum, in Strömungsrichtung gesehen, vor dem Bereich der Zuführung angeordnet ist.

9. Vorrichtung nach einem der Ansprüche 1 bis 8, **gekennzeichnet durch** ein längliches Mittel, welches sich in Strömungsrichtung gesehen sowohl vor als auch hinter den Bereich der Zuführung erstreckt.

10. Vorrichtung nach einem der Ansprüche 1 bis 9, **gekennzeichnet durch** einen größten Außendurchmesser des Mittels zwischen dem 0,3-fachen und dem 0,5-fachen des Rohrdurchmessers.

11. Vorrichtung nach einem der Ansprüche 1 bis 10, **gekennzeichnet durch** ein Mittel aus Keramik oder rostfreiem Stahl.

12. Vorrichtung nach einem der Ansprüche 1 bis 11, **dadurch gekennzeichnet; dass** das Mittel mit mindestens einem Verbindungselement an der Wandung des Rohrs befestigt ist.

13. Vorrichtung nach Anspruch 12, **gekennzeichnet durch** ein Verbindungselement mit kreisförmigem Querschnitt.

14. Vorrichtung nach Anspruch 12, **gekennzeichnet durch** eine Schaufel als Verbindungselement.

15. Vorrichtung nach Anspruch 14, **gekennzeichnet durch** eine tangential gebogene Schaufel.

16. Vorrichtung nach einem der Ansprüche 1 bis 15, **dadurch gekennzeichnet, dass** das Rohr im Bereich des Mittels eine Verengung aufweist.

17. Vorrichtung nach einem der Ansprüche 1 bis 16, **gekennzeichnet durch** eine dem Rohr vorgeschaltete Verdampfungskammer mit dem Rohr axial gegenüber liegenden Düsen für einen flüssigen Kraftstoff sowie für ein primäres Medium zur Verdampfung des Kraftstoffs.

18. Vorrichtung nach Anspruch 17, **gekennzeichnet durch** einen Abstand zwischen den Düsen und dem Rohr, der mindestens dreimal so groß ist wie die in Strömungsrichtung des Kraftstoffdampfs gemessene Länge des Mittels.

19. Vorrichtung nach einem der Ansprüche 17 bis 18, **gekennzeichnet durch** eine Dralldruckzerstäubungsdüse für den flüssigen Kraftstoff.

20. Vorrichtung nach einem der Ansprüche 17 bis 19, **gekennzeichnet durch** mindestens einen der Düse für das primäre Medium vorgeschalteten Drallerzeuger.

21. Vorrichtung nach einem der Ansprüche 17 bis 20, **gekennzeichnet durch** eine die Düse für den flüssigen Kraftstoff umgebende Düse für das primäre Medium.

22. Vorrichtung nach Anspruch 21, **gekennzeichnet durch** eine Düse für das primäre Medium mit mehreren Zuleitungen für das primäre Medium.

23. Vorrichtung nach einem der Ansprüche 17 bis 22, **gekennzeichnet durch** eine Verdampfungskammer mit zusätzlichen Düsen für ein oxidierendes sekundäres Medium.

24. Vorrichtung nach Anspruch 23, **gekennzeichnet durch** mindestens eine Rezirkulationsleitung zur Rückführung von Gasen in den Bereich der Düsen für den Kraftstoff und für das primäre Medium.

25. Vorrichtung nach Anspruch 24, **gekennzeichnet durch** eine Rezirkulationsleitung, die vollständig innerhalb der Verdampfungskammer angeordnet ist.

26. Vorrichtung nach Anspruch 24, **gekennzeichnet durch** eine Rezirkulationsleitung, die sich bis jenseits der Zuführung für das Oxidationsmittel erstreckt.

## Claims

1. Device for producing a fuel oxidation agent mixture for a reformer, comprising a pipe through which a fuel vapour can flow in at least one flow direction, with at least one inlet for an oxidation agent in its wall, **characterised by** at least one means located in the area of the inlet for diverting the axle adjacent flow of fuel vapour into the outer areas of the pipe.

2. Device according to Claim 1, **characterised by** an inlet, the material outlet direction of which deviates from the radial direction by up to 15 degrees.

3. Device according to one of the Claims 1 to 2, **characterised by** a means, the external diameter of which takes up a local maximum along the flow direction when measured normally in the flow direction.

4. Device according to Claim 3, **characterised by** a means at least comprising a drop-shaped part.

5. Device according to Claim 3, **characterised in that** the means comprises a larger external diameter at its front end when viewed in the flow direction than at its rear end.

6. Device according to Claim 5, **characterised by** a means that comprises at least one spindle-shaped part.

7. Device according to one of the Claims 1 to 6, **characterised by** a means, the external diameter of which takes up a local minimum along the flow direction when measured normally in the flow direction.

8. Device according to Claim 7, **characterised in that** the local minimum is located prior to the area of the inlet when viewed in the flow direction.

9. Device according to one of the Claims 1 to 8, **characterised by** an elongated means that extends prior to as well as behind the area of the inlet when viewed in the flow direction.

10. Device according to one of the Claims 1 to 9, **characterised in that** the greatest external diameter of the means lies between 0.3 times and 0.5 times the pipe diameter.

11. Device according to one of the Claims 1 to 10, **characterised by** a means made of ceramic or stainless steel.

12. Device according to one of the Claims 1 to 11, **characterised in that** the means is fitted to the wall of the pipe with at least one connection element.

13. Device according to Claim 12, **characterised by** a connection element with a circular cross-section.

14. Device according to Claim 12, **characterised by** a blade as the connection element.

15. Device according to Claim 14, **characterised by** a tangentially arced blade.

16. Device according to one of the Claims 1 to 15, **characterised in that** the pipe comprises a narrowing in the area of the means.

17. Device according to one of the Claims 1 to 16, **characterised by** an evaporation chamber located upstream of the pipe, with nozzles located axially opposite the pipe for a liquid fuel as well as for a primary medium for evaporating the fuel.

18. Device according to Claim 17, **characterised by** a gap between the nozzles and the pipe, at least three times the size of the length of the means measured in the flow direction of the fuel vapour.

19. Device according to one of the Claims 17 to 18, **characterised by** a torsion pressure diffuser nozzle for the liquid fuel.

20. Device according to one of the Claims 17 to 19, **characterised by** at least one torsion generator located upstream of the nozzle for the primary medium.

21. Device according to one of the Claims 17 to 20, **characterised by** a nozzle for the primary medium, surrounding the nozzle for the liquid fuel.

22. Device according to Claim 21, **characterised by** a nozzle for the primary medium with several supply lines for the primary medium.

23. Device according to one of the Claims 17 to 22, **characterised by** an evaporation chamber with additional nozzles for an oxidising secondary medium.

24. Device according to Claim 23, **characterised by** at least one recirculation line for recirculating gases into the area of the nozzles for the fuel and for the primary medium.

25. Device according to Claim 24, **characterised by** a recirculation line located entirely within the evaporation chamber.

26. Device according to Claim 24, **characterised by** a recirculation line extending beyond the inlet for the oxidation means.

## Revendications

1. Dispositif pour la production d'un mélange carburant-oxydant pour un reformeur, comprenant un conduit où peut circuler une vapeur de carburant dans au moins une direction d'écoulement, avec au moins une amenée pour un oxydant ménagée dans sa paroi, **caractérisé par** au moins un moyen de dérivation disposé dans la zone de l'amenée pour la dérivation du flux de vapeur de carburant proche de l'axe vers les parties extérieures du conduit.

2. Dispositif selon la revendication 1, **caractérisé par** une amenée dont la direction de sortie de produit s'écarte jusqu'à 15 degrés de la direction radiale.

3. Dispositif selon l'une des revendications 1 et 2, **caractérisé par** un moyen dont le diamètre extérieur mesuré normalement à la direction d'écoulement atteint un maximum local le long de la direction d'écoulement.

4. Dispositif selon la revendication 3, **caractérisé par** un moyen comprenant au moins une partie en forme de goutte.

5. Dispositif selon la revendication 3, **caractérisé en ce que** le moyen présente, à son extrémité antérieure dans la direction d'écoulement, un diamètre extérieur supérieur à celui de son extrémité postérieure.

6. Dispositif selon la revendication 5, **caractérisé par** un moyen comprenant au moins une partie en forme de tige.

7. Dispositif selon l'une des revendications 1 à 6, **caractérisé par** un moyen dont le diamètre extérieur mesuré normalement à la direction d'écoulement atteint un minimum local le long de la direction d'écoulement.

8. Dispositif selon la revendication 7, **caractérisé en ce que** le minimum local est disposé devant la zone de l'amenée dans la direction d'écoulement.

9. Dispositif selon l'une des revendications 1 à 8, **caractérisé par** un moyen oblong qui s'étend devant aussi bien que derrière la zone de l'amenée dans la direction d'écoulement.

10. Dispositif selon l'une des revendications 1 à 9, **caractérisé par** un diamètre extérieur maximal du moyen compris entre 0,3 fois et 0,5 fois le diamètre du conduit.

11. Dispositif selon l'une des revendications 1 à 10, **caractérisé par** un moyen en céramique ou en acier inoxydable.

12. Dispositif selon l'une des revendications 1 à 11, **caractérisé en ce que** le moyen est fixé à la paroi du conduit par au moins un élément de raccordement.

13. Dispositif selon la revendication 12, **caractérisé par** un élément de raccordement à section transversale circulaire.

14. Dispositif selon la revendication 12, **caractérisé par** une pale en tant qu'élément de fixation.

15. Dispositif selon la revendication 14, **caractérisé par** une pale à courbure tangentielle.

16. Dispositif selon l'une des revendications 1 à 15, **caractérisé en ce que** le conduit présente un étranglement dans la zone du moyen.

17. Dispositif selon l'une des revendications 1 à 16, **caractérisé par** une chambre d'évaporation en amont du conduit, avec des buses axialement opposées au conduit pour un carburant liquide et pour un agent primaire pour l'évaporation du carburant.

18. Dispositif selon la revendication 17, **caractérisé par** un espacement entre les buses et le conduit, lequel est trois fois supérieur à la longueur du moyen mesurée dans la direction d'écoulement de la vapeur de carburant.

19. Dispositif selon l'une des revendications 17 et 18, **caractérisé par** une buse d'atomisation à tourbillon sous pression pour le carburant liquide.

20. Dispositif selon l'une des revendications 17 à 19, **caractérisé par** au moins un générateur de tourbillon en amont de la buse pour l'agent primaire.

21. Dispositif selon l'une des revendications 17 à 20, **caractérisé par** une buse pour l'agent primaire entourant la buse pour le carburant liquide.

22. Dispositif selon la revendication 21, **caractérisé par** une buse pour l'agent primaire avec plusieurs amenées pour l'agent primaire.

23. Dispositif selon l'une des revendications 17 à 22, **caractérisé par** une chambre d'évaporation avec des buses supplémentaires pour un agent secondaire oxydant.

24. Dispositif selon la revendication 23, **caractérisé par** au moins une conduite de recirculation pour le retour de gaz vers la zone des buses pour le carburant et pour l'agent primaire.

25. Dispositif selon la revendication 24, **caractérisé par** une conduite de recirculation disposée totalement à l'intérieur de la chambre d'évaporation.

26. Dispositif selon la revendication 24, **caractérisé par** une conduite de recirculation qui s'étend jusqu'au-delà de l'amenée pour l'oxydant.
